# EUROPÄISCHE PATENTSCHRIFT

(11) **EP 0 898 872 B1**
(45) Veröffentlichungstag und Bekanntmachung des Hinweises auf die Patenterteilung: **16.04.2003**
(21) Anmeldenummer: 98111522.3
(22) Anmeldetag: 23.06.1998
(51) Int. Cl.: A01D 41/12, A01D 43/08

(54) **Verfahren und Vorrichtung zum Auswerfen eines Gutes**
Method and apparatus for spreading a product
Méthode et appareil pour distribuer un produit

(30) Priorität: 04.08.1997 DE 19733722
(43) Veröffentlichungstag der Anmeldung: 03.03.1999
(73) Patentinhaber: CLAAS KGaA, 33428 Harsewinkel (DE)
(72) Erfinder: Strieker, Norbert, 33334 Gütersloh (DE); Hugenroth, Ludger, 48346 Ostbevern (DE)

(56) Entgegenhaltungen:
- EP-A- 0 070 340
- EP-A- 0 125 007
- EP-A- 0 672 339
- EP-A- 0 685 151
- FR-A- 2 328 385
- US-A- 3 883 010

## Beschreibung

Die Erfindung betrifft ein Verfahren und eine Vorrichtung zum Auswerfen eines Gutes nach dem Oberbegriff der Patentansprüche 1 und 6.

Aus der EP 0 631 717 A1 ist es bekannt, zum Auswerfen eines Gutes eine Schwenkeinheit mit einem Wurfgebläse vorzusehen, bei der ein Druckmittelzylinder hin- und herbewegt wird zur Erzeugung einer Schwenkbewegung des Wurfgebläses. Der Auswurf des Gutes erfolgt auf einer vorgegebenen Breite.

Es ist bekannt, zur Ansteuerung der Bewegung eines im Druckmittelzylinder befindlichen Kolbens Wegeventile vorzusehen, die für ein Druckmedium abwechselnd den Zulauf zu gegenüberliegend in einem Stirnbereich des Druckmittelzylinders angeordneten Anschlußstellen öffnen bzw. schließen. Zum Ausgleich von Druckspitzen an den Umkehrpunkten des Kolbens ist ein Speicher vorgesehen, welcher jedoch bei hohen Schaltzyklen einer großen Beanspruchung ausgesetzt ist.

Die Patentansprüche 1 und 6 sind gegenüber EP 0 070 340 A abgegrenzt.

Es ist daher Aufgabe der vorliegenden Erfindung, ein Verfahren und eine Vorrichtung zum Auswerfen eines Gutes derart weiterzubilden, daß eine zuverlässige und kostengünstige Ansteuerung eines Druckmittelzylinders erzielt wird.

Zur Lösung dieser Aufgabe weist die Erfindung die Merkmale des Patentanspruchs 1 und des Patentanspruchs 6 auf.

Der Vorteil des erfindungsgemäßen Verfahrens gemäß Patentanspruch 1 liegt insbesondere darin, daß durch die elektronische Ansteuerung eines Ventils eine gewünschte vorgegebene harmonische Bewegung des Kolbens ausgeführt werden kann. Hierdurch kann die Bewegung des Kolbens variabel an die jeweiligen Anforderungen des Schwenkbetriebes angepaßt werden.

Vorteilhaft wird der Kolben ausgehend von einem Ventilumschaltzeitpunkt mit einem nach und nach ansteigenden Antriebsdruck beaufschlagt, so daß die Bewegung des Kolbens im Bereich des Umkehrpunktes stetig erfolgen kann. Vorzugsweise wird der Kolben in einem Umkehrbereich desselben mit einem reduzierten Antriebsdruck beaufschlagt.

Nach einer Weiterbildung der Erfindung erfolgt die Ansteuerung des steuernden Ventils mittels einer elektronischen Pulsweiten-Ansteuerung, mit der ein linearer Anstieg des Antriebsdrucks zur Erzeugung einer ruckfreien Schwenkbewegung bewirkt wird.

Nach der erfindungsgemäßen Vorrichtung gemäß Patentanspruch 6 ist das steuernde Ventil als Drucksteuerventil ausgebildet, das mittels einer elektrischen Steuereinrichtung geschaltet wird. Durch die Ansteuerung des Drucksteuerventil läßt sich ein vorgegebener Druckverlauf innerhalb des Druckmittelzylinders einstellen, der im Schwenkbetrieb einen harmonischen Bewegungsablauf des Kolbens gewährleistet. Es wird eine ruckfreie Schwenkbewegung erzielt und die Steuereinheit zeichnet sich durch eine lange Lebensdauer aus.

Nach einer besonderen Ausführungsform der Erfindung sind zwei 3/2-Wegeventile mit dem Druckmittelzylinder verbunden, die abwechselnd angesteuert werden zur Erzeugung der Hinund Herbewegung des Kolbens im Druckmittelzylinder. Diese Wegeventile ermöglichen ein schnelles Schalten ohne Totzeiten.

Nach einer Weiterbildung der Erfindung weist die Steuereinheit eine hydraulische Stelleinrichtung mit einem eine Druckquelle und einen Tank aufweisenden Hydraulikkreislauf auf, der einen zuverlässigen Schwenkbetrieb ermöglicht. Durch Ansteuerung des Drucksteuerventils kann der Druck in der Druckmittelleitung in Abhängigkeit von Vorgaben einer elektrischen Steuereinrichtung variiert werden.

Nach einer Weiterbildung der Erfindung weist die elektrische Steuereinrichtung Mittel auf, mittels derer in Abhängigkeit von den aktuellen Verhältnissen die Schaltzeitpunkte für die Ventile neu bestimmt werden. Hierdurch wird ein lernendes System geschaffen, das auf geänderte Zustandsgrößen reagiert und einen ordnungsgemäßen harmonischen Schwenkbetrieb aufrechterhält.

Weitere Vorteile der Erfindung werden in den weiteren Unteransprüchen beschrieben.

Ein Ausführungsbeispiel der Erfindung wird nachfolgend anhand der Zeichnung näher erläutert.

Es zeigen:
- Fig. 1:: Eine schematische Rückansicht eines Anbauhäckslers mit zwei schwenkbeweglichen ausgebildeten Wurfgebläsen,
- Fig. 2:: eine schematische Draufsicht auf die beiden Wurfgebläse nach Fig. 1,
- Fig. 3:: ein Blockschaltbild einer Steuereinheit zur Ansteuerung der Schwenkeinheit,
- Fig. 4:: ein zeitlicher Verlauf von Ventilschaltzuständen und eines Kolbenweges des Druckmittelzylinders im Schwenkbetrieb und
- Fig. 5:: ein zeitlicher Verlauf der Ventilschaltzustände und des Kolbenweges im Justierbetrieb der Schwenkeinheit.

Die Erfindung kann überall dort eingesetzt werden, wo es darauf ankommt, eine gleichmäßige Verschwenkung eines Bauteils dauerhaft aufrechtzuerhalten. Beispielhaft kann die Erfindung verwendet werden für ein Salzstreugerät für den Straßenverkehr oder, wie nachfolgend beschrieben, in einem Anbauhäcksler für einen Mähdrescher.

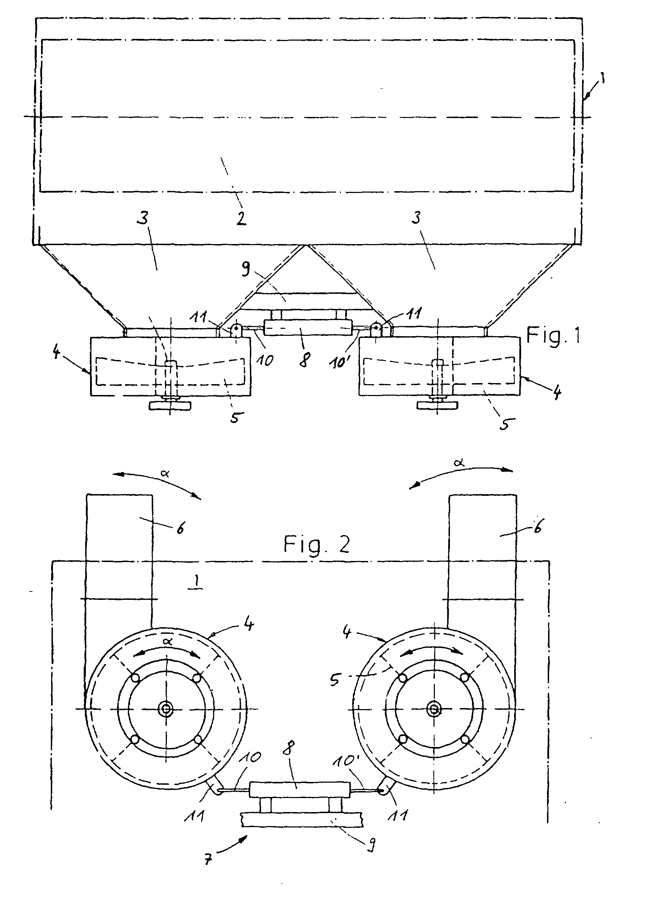

Wie aus Fig. 1 in Verbindung mit Fig. 2 zu ersehen ist, weist ein Anbauhäcksler 1 einen Strohhäcksler 2 auf, an dem sich untenseitig ein Übergabetrichter 3 anschließt, der das gehäckselte Stroh jeweils einem Wurfgebläse 4 zuführt. Das Wurfgebläse 4 weist jeweils ein Laufrad 5 auf, das das Strohgut jeweils einem Auswurfstutzen 6 zuführt, durch den das Strohgut in die Umgebung ausgeworfen wird. Die beiden parallel zueinander angeordneten Wurfgebläse 4 sind mittels einer Schwenkeinheit 7 miteinander verbunden, wobei bei Betrieb der Schwenkeinheit 7 die Auswurfstutzen 6 in seitlicher Richtung hin- und herbewegt werden.

Die Schwenkeinheit 7 besteht im wesentlichen aus einem Druckmittelzylinder 8, der an einem feststehenden Tragteil 9 befestigt ist. Der Druckmittelzylinder 8 ist als doppelt wirkender Zylinder ausgebildet und weist zwei sich beidseitig eines Kolbens 25 anschließende Kolbenstangen 10, 10' auf. Die Kolbenstangen 10, 10' sind an ihrem freien Ende an jeweils einer Gelenkstelle 11 des Wurfgebläses 4 angelenkt.

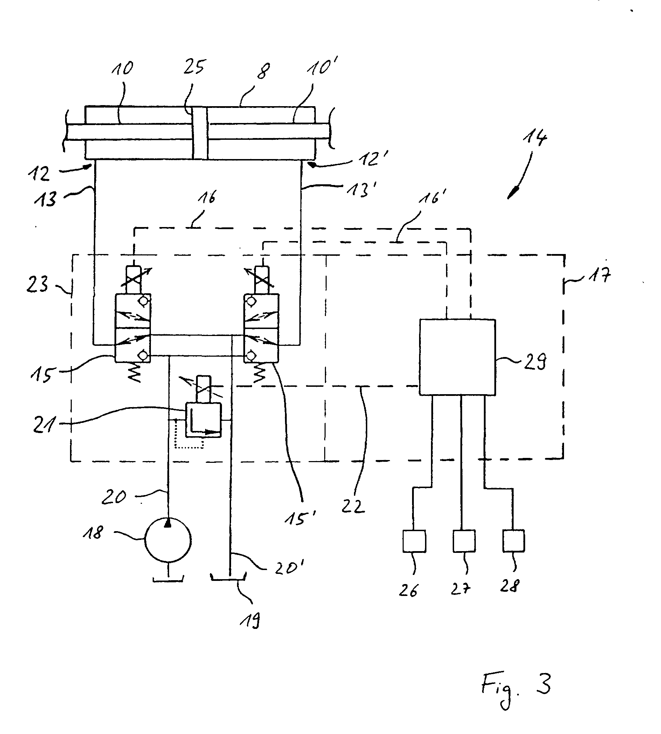

In einem Bereich der Stirnseite des Druckmitelzylinders 8 ist jeweils ein Druckmittelanschluß 12, 12' zum Anschluß einer Druckmittelleitung 13, 13' vorgesehen. Eine Steuereinheit 14 steuert die abwechselnde Beaufschlagung der Anschlüsse 12, 12' mit einem Druckmittel, so daß sich die Auswurfstutzen 6 gleichmäßig um einen vorgegebenen Schwenkwinkel α hin- und herbewegen. Wie Fig. 3 zeigt, sind die Anschlüsse 12, 12' jeweils mit einem 3/2 Wegeventil 15 und 15' verbunden, die jeweils über einen Elektromagneten verfügen und jeweils über eine Steuerleitung 16 und 16' elektrisch betätigbar sind. Die Wegeventile 15, 15' sind als Sitzventile ausgebildet. Eine elektrische Steuereinrichtung 17 schaltet die Wegeventile 15, 15' in jeweils eine Öffnungs- bzw. Schließstellung derart, daß die Wegeventile 15, 15' abwechselnd mit einer Druckquelle 18 und einem Tank 19 mittels Druckmittelleitungen 20 bzw. 20' verbunden sind. Die Druckquelle 18 liefert einen konstanten Volumentstrom.

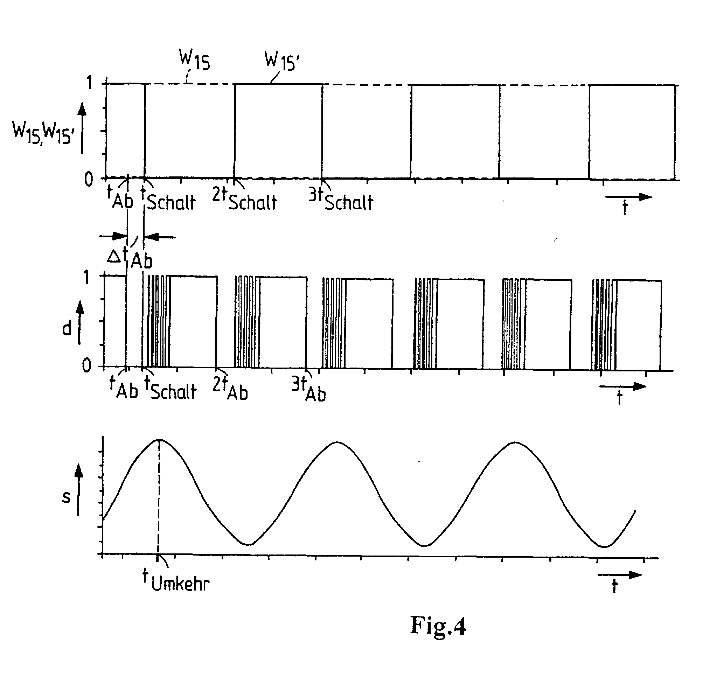

Wie aus Fig. 4 deutlich wird, wird in einem Schwenkbetrieb bei einer ersten Schaltstellung das Druckmittel über die Druckmittelleitung 13 als Zulauf zu dem Anschluß 12 des Druckmittelzylinders 8 geleitet und an dem gegenüberliegenden Anschluß 12' mittels der Druckmittelleitung 13 als Ablauf zu dem anderen 3/2-Wegeventil 15'geführt. In der darauffolgenden zweiten Schaltstellung der Wegeventile 15, 15', in der sich der Kolben 25 des Druckmittelzylinders 8 in umgekehrter Richtung bewegt, dient die Druckmittelleitung 13' als Zulauf, während die Druckmittelleitung 13 als Ablauf dient.

Zwischen den Druckmittelleitungen 20 und 20' ist ein elektrisch betätigbares Drucksteuerventil 21 angeordnet, das über eine Steuerleitung 22 mit der elektrischen Steuereinrichtung 17 verbunden ist. Das Drucksteuerventil 21 ist als Druckbegrenzungsventil ausgebildet. Die oben beschriebenen Ventile 15, 15', 21 sowie die Druckquelle 18 und der Tank 19 bilden eine hydraulische Stelleinrichtung 23, die im Zusammenwirken mit der elektrischen Steuereinrichtung 17 eine ruckfreie Schwenkbewegung der Auswurfstutzen 6 ermöglicht.

Aus dem s/t-Weg-Zeitdiagramm des Kolbens 25 in Fig. 4 wird deutlich, daß eine harmonische Schwenkbewegung erzeugt wird. Zu diesem Zweck werden Wegesteuersignale w₁₅, w₁₅' abwechselnd ein- und ausgeschaltet. Das Drucksteuerventil 21 wird mittels eines Drucksteuersignals d in dem Bereich des Umkehrpunktes des Kolbens 25 derart angesteuert, daß ein verringerter Druck bzw. Antriebsdruck in den Druckmittelleitungen 13, 13' anliegt bzw. im Druckmittelzylinder 8. Vorteilhaft wird bereits vor Erreichen des Umschaltzeitpunkts t_{Schalt} der Ventile 15, 15' das Drucksteuerventil 21 derart angesteuert, daß ein minimaler Druck anliegt. Gleichzeitig mit dem Umschalten der Wegeventile 15, 15' wird der Druck mittels des Drucksteuerventils 21 nach und nach bis zu einem Maximalwert erhöht. Dieser im Mittel lineare Druckanstieg kann beispielsweise durch eine Impulsweitensteuerung ermöglicht werden. Zur Erzeugung einer harmonischen oszillierenden Bewegung des Kolbens 25 reicht es aus, wenn der maximale Druck bis zu einem Abschaltzeitpunkt t_{Ab} des Drucksteuerventils 21 erhalten bleibt, in dem der Kolben 25 seine Mittelstellung überschritten hat. Im Abschaltzeitpunkt t_{Ab} wird der Druck schlagartig auf einen minimalen Wert reduziert und bis zum nächsten Umschaltzeitpunkt t_{Schalt} aufrechterhalten. Dieses so gebildete Abschaltzeitintervall Δt_{Ab} liegt ausreichend vor dem Umkehrschaltzeitpunkt t_{Umkehr} des Kolbens 25, so daß eine harmonische Beschleunigung des Kolbens 25 im Bereich der Umkehrpunkte gewährleistet ist.

Alternativ kann anstatt der zwei 3/2-Wegeventile 15, 15' auch ein einziges 4/3-Wegeventil verwendet werden. Dieses hat gegenüber der Kombination von zwei einzelnen Ventilen den Nachteil, daß Totzeiten beim Umschalten entstehen, so daß die Verwendung eines einzigen 4/3-Wegeventils lediglich eine zweitbeste Lösung darstellt.

Die elektrische Steuereinheit 17 ist eingangsseitig mit einem Schwenkwinkel-Istwertgeber 26, einem Schwenkwinkel-Sollwertgeber 27 und einem Seitenwindausgleichs-Sollwertgeber 28 verbunden.

Ausgangsseitig weist die elektrische Steuereinrichtung 17 die zu den Ventilen 15, 15', 21 hinführenden Steuerleitungen 16, 16', 22 auf. Zur Verarbeitung der Eingangssignale bzw. zur Erzeugung der Steuersignale w₁₅, w₁₅', d für die Ventile 15, 15', 21 weist die elektrische Steuereinrichtung 17 einen Mikrocontroller 29 auf, der in Abhängigkeit von den Eingangsgrößen fortlaufend die Steuersignale w₁₅, w₁₅', d berechnet.

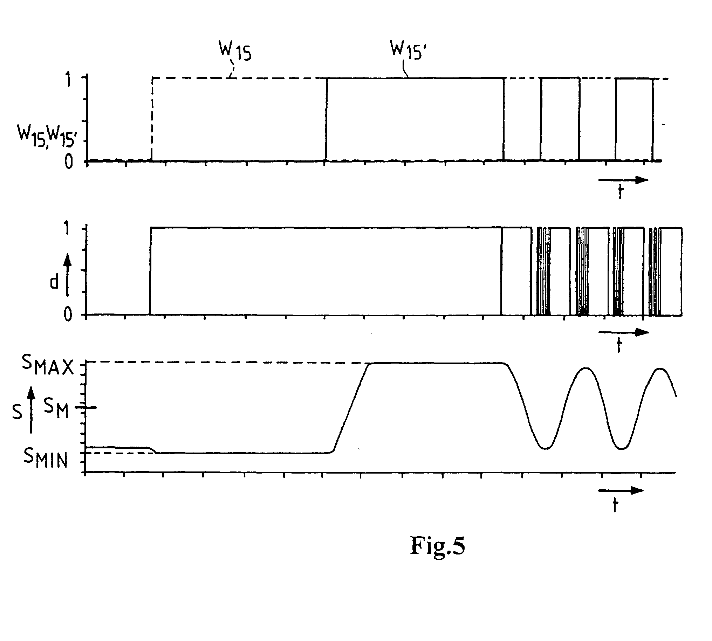

Wie aus Fig. 5 zu ersehen ist, erfolgt vor Einsetzen des Schwenkbetriebes ein Justiervorgang, innerhalb dessen die Endanschläge des Kolbens 25, d.h. die maximale Auslenkung s_{MAX}, s_{MIN} des Kolbens 25 nacheinander angefahren wird. Anschließend kann unter Mittelwertbildung der beiden gespeicherten Endanschlagwerte die Mittenposition s_{M} des Kolbens 25 ermittelt werden. Werden die vorgegebenen Maximal- und Minimalwerte s_{MAX}, s_{MIN} nicht erreicht, erfolgt via CAN-Bus eine Fehlermeldung an das Bordinformationssystem, während gleichzeitig die Ventile 15, 15' bis zum nächsten Einschalten der Steuerung stromlos geschaltet werden. Infolge dieses Justiervorganges jeweils zu Beginn des jeweiligen Steuervorganges kann eine mechanische Justierung des Istwertgebers entfallen. Weiterhin kann hierdurch ein Kabelbruch bzw. ein Defekt eines Ventils erkannt werden, so daß zusätzlich eine Funktionsüberwachung gewährleistet ist.

Nach erfolgreichem Abschluß des Justiervorganges kann die Steuerung in den Schwenkbetrieb überführt werden. In Abhängigkeit von einem vorgegebenen Schwenkwinkel-Sollwert 27 und ggfs. zusätzlich einem Seitenwindausgleich-Sollwert 28 werden nun periodisch die Ventile 15, 15' bzw. 21 angesteuert, wobei fortlaufend mittels des Istwertgebers 26 der aktuelle Umkehrpunkt des Kolbens 25 ermittelt und mit einem aus dem Schwenkwinkel-Sollwert 27 und Seitenwindausgleichs-Sollwert 28 berechneten vorgegebenen Soll-Umkehrpunkt verglichen wird. In Abhängigkeit von dem Vergleichswert wird ein neuer Abschaltzeitpunkt (t _{Ab}) berechnet und eine entsprechende Aussteuerung des Drucksteuerventils 21 bewirkt, so daß auch bei Störeinflüssen eine zuverlässige und ruckfreie Schwenkbewegung erzielt wird. Auf diese Weise wird ein lernendes System geschaffen, das auf gegebenenfalls auftretende Störgrößen, wie z.B. schwankende Öltemperatur, Reibung des Systems, unterschiedliche Ventilschaltzeiten, reagiert und diese im Sinne eines periodischen Schwenkbetriebes ausregelt. Damit kein Übersteuern eintritt, ist im Mikrocontroller 29 vorgesehen, daß pro Schwenkvorgang etwa 1/8 der Abweichung zwischen dem Schwenkwinkel-Sollwert 27 und Schwenkwinkel-Istwertgeber 26 durch Verschieben des Abschaltzeitpunktes (t_{Ab}) ausgeregelt. Hierdurch wird gewährleistet, daß bei schlagartiger Änderung eines Zustandsgröße der darauffolgende dynamische Zustand kontrolliert in den statischen Zustand übergeht.

Alternativ können die Wegeventile 15, 15' auch als proportionale Wegeventile ausgebildet sein. Auf diese Weise könnte ggfs. auf das Drucksteuerventil verzichtet werden. Statt dessen könnte die Steuerung zur Erreichung eines harmonischen Schwenkvorgangs durch eine abgestimmte direkte Ansteuerung der Wegeventile mittels des Mikrocontrollers 29 erfolgen.

Alternativ zu der vorgehend beschriebenen hydraulischen Steuereinrichtung kann die erfindungsgemäße Vorrichtung auch eine pneumatische Steuereinrichtung aufweisen. Die Art der Steuerung ist abhängig von dem Anwendungsfall bzw. von der Größe der erforderlichen Schaltzeiten.

## Patentansprüche

1. Verfahren zum Auswerfen eines Gutes, insbesonders eines Strohgutes, wobei ein Druckmittelzylinder (8) hin- und herbewegt wird zur Erzeugung einer Schwenkbewegung eines Wurfgebläses (4), dass mindestens ein Wegeventil (15, 15') elektrisch angesteuert wird, **dadurch gekennzeichnet, daß** mindestens ein Wegeventil (15, 15') oder ein Drucksteuerventil (21) daß derart elektrisch angesteuert wird, dass der Kolben (25) des Druckmittelzylinders (8) im Schwenkbetrieb in einem Umkehrbereich des Kolbens (25) mit einem nach und nach ansteigenden Antriebsdruck beaufschlagt wird und daß der Antriebsdruck vor Erreichen eines Ventilumschaltzeitpunkts (t Schalt) eines korrespondierenden Wegeventils (15, 15') abgefallen ist.

2. Verfahren nach Anspruch 1, **dadurch gekennzeichnet, daß** die Umschaltung des Wegeventils (15, 15') in dem Ventilumschaltzeitpunkt (t_{Schalt}) vor dem Erreichen des Umkehrzeitpunktes (t_{Umkehr}) des Kolbens (25) liegt.

3. Verfahren nach Anspruch 1 oder 2, **dadurch gekennzeichnet, daß** vor der Umschaltung des Wegeventils (15, 15') im Ventilumschaltzeitpunkt (t_{Schalt}) bereits ein Drucksteuerventil (21) in einem Abschaltzeitintervall (t_{Ab}) abgeschaltet ist, derart, daß der Druckmittelzylinder (8) mit keinem Antriebsdruck beaufschlagt ist.

4. Verfahren nach einem der Ansprüche 1 bis 3, **dadurch gekennzeichnet, daß** der Kolben (25) nach der Umschaltung der Wegeventile (15, 15') mit einem im Mittel linear ansteigenden Antriebsdruck beaufschlagt wird.

5. Verfahren nach einem der Ansprüche 1 bis 4, **dadurch gekennzeichnet, daß** das Drucksteuerventil (21) nach der Umschaltung der Wegeventile (15, 15') zur Erreichung eines linearen Druckanstiegs mittels Pulsweitensteuerung angesteuert wird.

6. Vorrichtung zum Auswerfen eines Gutes, insbesondere eines Strohgutes, mit einer Schwenkeinheit (7), die ein Wurfgebläse (4) aufweist, mit einer Steuereinheit (14), die mindestens ein Wegeventil (15, 15') und ein Drucksteuerventil (21) aufweist zur Steuerung so daß zumindest ein Auswurfstutzen (6) des Wurfgebläses (4) hin- und herschwenkbar ist, **dadurch gekennzeichnet, daß** das Wurt gebläse (4) mit einem Druckmittelzylinder (8) wirkverbunden ist der von dem Wegeventil (15, 15') gesteuert wird und daß eine elektrische Steuereinrichtung vorgesehen ist, die das Drucksteuerventil (21) und /oder das Wegeventil (15, 15') derart beaufschlagt, dass ein Kolben (25) des Druckmittelzylinders (8) im wesentlichen eine harmonische Hin- und Herbewegung ausführt.

7. Vorrichtung nach Anspruch 6, **dadurch gekennzeichnet, daß** die Steuereinheit (14) eine hydraulische Stelleinrichtung (23) aufweist mit einem Hydraulikzylinder als Druckmittelzylinder (8), mit einer Druckquelle (18) zur Bereitstellung eines Hydraulikfluids, mit einem das Fluid sammelnden Tank (19), wobei das Drucksteuerventil (21) über eine Hydraulikleitung mit der Druckquelle (18) einerseits und mit dem Tank (19) andererseits verbunden ist zur Einstellung eines vorgegebenen Antriebdrucks.

8. Vorrichtung nach Anspruch 6 oder 7, **dadurch gekennzeichnet, daß** der Druckmittelzylinder (8) als doppelt wirkender Druckmittelzylinder (8) ausgebildet ist mit jeweils einem im Bereich einer Stirnseite angeordneten Druckmittelanschluß (12,12').

9. Vorrichtung nach einem der Ansprüche 6 bis 8, **dadurch gekennzeichnet, daß** die hydraulische Stelleinrichtung (23) zwei 3/2-Wegeventile (15, 15') aufweist, die im Schwenkbetrieb abwechselnd einen Zulauf (12, 12') und einen Ablauf (12, 12') zum bzw. vom Druckmittelzylinder (8) schalten.

10. Vorrichtung nach einem der Ansprüche 6 bis 9, **dadurch gekennzeichnet, daß** die Steuereinheit (14) eine elektrische Steuereinrichtung (17) aufweist, die eingangsseitig mit einem Schwenkwinkel-Istwertgeber (26), einem Schwenkwinkel-Sollwertgeber (27) und gegebenenfalls mit einem Seitenwindausgleich-Sollwertgeber (28) verbunden ist, und daß die elektrische Steuereinrichtung (17) im Schwenkbetrieb fortlaufend aus dem Vergleich des mittels des Schwenkwinkel-Istwertgebers (26) detektierten aktuellen Umkehrpunkte des Kolbens (25) mit dem vorgegebenen Umkehrpunkt die Umschaltzeitpunkte (t_{Schalt}) der Wegeventile (15, 15') und/oder die Abschaltzeitpunkte (t_{Ab}) des Drucksteuerventils (21) ermittelt.

11. Vorrichtung nach Anspruch 10, **dadurch gekennzeichnet, daß** die elektrische Steuereinrichtung (17) Mittel aufweist zur Berechnung des vorgegebenen Umkehrpunktes aus den Werten des Schwenkwinkel-Sollwertgebers (27) und des Seitenwindausgleich-Sollwertgebers (28).

12. Vorrichtung nach einem der Ansprüche 6 bis 11, **dadurch gekennzeichnet, daß** die elektrische Steuereinrichtung (17) ein periodisches Steuersignal (d) zur Ansteuerung des Drucksteuerventils (21) erzeugt, das in einem Umkehrbereich des Kolbens (25) einen linearen Anstieg aufweist.

13. Vorrichtung nach Anspruch 12, **dadurch gekennzeichnet, daß** die elektrische Steuereinrichtung (17) Mittel aufweist zur Bereitstellung des Steuersignals (d, w₁₅, w₁₅') als digitales Signal, insbesondere als pulsweitengesteuertes digitales Signal.

14. Vorrichtung nach einem der Ansprüche 6 bis 13, **dadurch gekennzeichnet, daß** Justiermittel vorgesehen sind, derart, daß in einem Justierbetrieb die maximalen Umkehrpunkte (S_{MAX}, s_{MIN}) des Kolbens (25) angefahren und detektiert werden und daß anschließend aus den detektierten Umkehrwerten eine mechanische Mittenposition (s_{M}) des Kolbens (25) berechnet wird.

## Claims

1. A method of ejecting material, in particular straw material, wherein a pressure fluid cylinder (8) is reciprocated to produce a pivotal movement of a projection blower (4) and at least one directional control valve (15, 15') is electrically operated, **characterised in that** at least one directional control valve (15, 15') or a pressure control valve (21) is electrically operated in such a way that the piston (25) of the pressure fluid cylinder (8) is subjected to a progressively rising drive pressure in the pivotal mode of operation in a reversal region of the piston (25) and that the drive pressure has dropped before the attainment of a valve switching-over time (t switch) of a corresponding directional control valve (15, 15').

2. A method according to claim 1 **characterised in that** switching-over of the directional control valve (15, 15') occurs at the valve switching-over time (t_{switch}) before the attainment of the reversal time (tᵣₑᵥₑᵣₛₐₗ) of the piston (25).

3. A method according to claim 1 or claim 2 **characterised in that** prior to switching-over of the directional control valve (15, 15') at the valve switching-over time (t_{switch}) a pressure control valve (21) is already switched off in a switch-off time interval (t_{off}) in such a way that the pressure fluid cylinder (8) is not acted upon by a drive pressure.

4. A method according to one of claims 1 to 3 **characterised in that** after switching-over of the directional control valves (15, 15') the piston (25) is subjected to a drive pressure which on average rises linearly.

5. A method according to one of claims 1 to 4 **characterised in that** after switching-over of the directional control valves (15, 15') the pressure control valve (21) is operated by means of pulse width control to achieve a linear rise in pressure.

6. Apparatus for ejecting material, in particular straw material, comprising a pivoting unit (7) having a projection blower (4), and a control unit (14) which has at least one directional control valve (15, 15') and a pressure control valve (21) for control purposes so that at least one ejection conduit (6) of the projection blower (4) is reciprocatingly pivotable, **characterised in that** the projection blower (4) is operatively connected to a pressure fluid cylinder (8) which is controlled by the directional control valve (15, 15') and that there is provided an electrical control device which acts on the pressure control valve (21) and/or the directional control valve (15, 15') in such a way that a piston (25) of the pressure fluid cylinder (8) substantially performs a harmonic reciprocating movement.

7. Apparatus according to claim 6 **characterised in that** the control device (14) has a hydraulic setting device (23) with a hydraulic cylinder as a pressure fluid cylinder (8), a pressure source (18) for providing a hydraulic fluid, and a tank (19) collecting the fluid, wherein the pressure control valve (21) is connected by way of a hydraulic line to the pressure source (18) on the one hand and to the tank (19) on the other hand to set a predetermined drive pressure.

8. Apparatus according to claim 6 or claim 7 **characterised in that** the pressure fluid cylinder (8) is in the form of a double-acting pressure fluid cylinder (8) with respective pressure fluid connections (12, 12') arranged in the region of an end.

9. Apparatus according to one of claims 6 to 8 **characterised in that** the hydraulic setting device (23) has two 3/2-directional control valves (15, 15') which in the pivotal mode of operation alternately switch a feed (12, 12') and a discharge (12, 12') to and from the pressure fluid cylinder (8) respectively.

10. Apparatus according to one of claims 6 to 9 **characterised in that** the control unit (14) has an electrical control device (17) which is connected on the input side to a pivotal angle actual value setting device (26), a pivotal angle reference value setting device (27) and optionally a side wind compensating reference value setting device (28) and that in the pivotal mode of operation the electrical control device (17) continuously ascertains the switching-over times (t_{switch}) of the directional control valves (15, 15') and/or the switch-off times (t_{off}) of the pressure control valve (21) from the comparison of the current reversal points of the piston (25) detected by means of the pivotal angle actual value setting device (26) to the predetermined reversal point.

11. Apparatus according to claim 10 **characterised in that** the electrical control device (17) has means for calculating the predetermined reversal point from the values of the pivotal angle reference value setting device (27) and the side wind compensating reference value setting device (28).

12. Apparatus according to one of claims 6 to 11 **characterised in that** the electrical control device (17) produces a periodic control signal (d) for operation of the pressure control valve (21) which has a linear rise in a reversal region of the piston (25).

13. Apparatus according to claim 12 **characterised in that** the electrical control device (17) has means for providing the control signal (d, w₁₅, w_{15'}) as a digital signal, in particular a pulse width-controlled digital signal.

14. Apparatus according to one of claims 6 to 13 **characterised in that** there are provided adjusting means such that in an adjusting mode of operation the maximum reversal points (s_{MAX}, s_{MIN}) of the piston (25) are approached and detected and that then a mechanical central position (s_{M}) of the piston (25) is calculated from the detected reversal values.

## Revendications

1. Procédé pour éparpiller un produit de récolte, en particulier un produit formant de la paille, un vérin à fluide de pression (8) étant déplacé avec un mouvement de va-et-vient aux fins de produire un mouvement de pivotement d'une soufflante d'éjection (4), **caractérisé en ce qu'**au moins un distributeur (15, 15') est commandé par voie électrique, de telle sorte que le piston (25) du vérin à fluide de pression (8), en fonctionnement de pivotement, soit alimenté avec une pression d'entraînement qui augmente progressivement dans une zone de rebroussement du piston (25) et **en ce que** la pression d'entraînement soit retombée avant d'atteindre un instant de commutation (t_{schalt}) d'un distributeur (15, 15') concerné.

2. Procédé selon la revendication 1, **caractérisé en ce que** la commutation du distributeur (15, 15') à l'instant de commutation (t_{schalt}) prend place avant l'instant de rebroussement (tᵤₘₖₑₕᵣ) du piston (25).

3. Procédé selon la revendication 1 ou 2, **caractérisé en ce qu'**avant la commutation du distributeur (15, 15') à l'instant de commutation (t_{schalt}), une vanne de contrôle de pression (21) a déjà été coupée à l'intérieur d'un intervalle de coupure (t_{Ab}), de sorte que le vérin à fluide de pression (8) n'est plus alimenté par une pression.

4. Procédé selon une des revendications 1 à 3, **caractérisé en ce que** le piston (25), après la commutation des distributeurs (15, 15'), est alimenté avec une pression d'entraînement qui croît de manière linéaire.

5. Procédé selon une des revendications 1 à 3, **caractérisé en ce que** la vanne de contrôle de pression (21), après la commutation des distributeurs (15, 15'), pour obtenir une augmentation linéaire de la pression, est commandée à l'aide d'une commande à amplitude d'impulsion

6. Dispositif pour éparpiller un produit de récolte, en particulier un produit formant de la paille, avec une unité pivotante (7) qui comporte une soufflante d'éjection (4), avec une unité de commande (14) qui comprend au moins un distributeur (15, 15') et une vanne de contrôle de pression (21) pour déplacer au moins un conduit d'éjection (6) de la soufflante d'éjection (4) avec un mouvement de va-et-vient, **caractérisé en ce que** la soufflante d'éjection (4) est reliée à un vérin à fluide de pression (8) commandé par le distributeur (15, 15') et **en ce qu'**il est prévu un dispositif de commande électrique qui commande la vanne de contrôle de pression (21) et/ou le distributeur (15, 15') de telle sorte que le piston (25) du vérin à fluide de pression (8) exécute essentiellement un mouvement de va-et-vient harmonieux.

7. Dispositif selon la revendication 6, **caractérisé en ce que** l'unité de commande (14) comporte un dispositif d'actionnement hydraulique (23), avec un vérin hydraulique comme vérin à fluide de pression (8), avec une source de pression (18) pour fournir un fluide hydraulique, avec un réservoir (19) recueillant le fluide, la vanne de contrôle de pression (21) étant reliée d'un côté à la source de pression (18) par l'intermédiaire d'une conduite hydraulique et de l'autre au réservoir (19) aux fins de régler une pression d'entraînement prédéterminée.

8. Dispositif selon la revendication 6 ou 7, **caractérisé en ce que** le vérin à fluide de pression (8) est agencé en vérin à fluide de pression (8) à double effet, avec une arrivée de fluide de pression (12, 12') prévue chaque fois dans une zone d'une face frontale.

9. Dispositif selon une des revendications 6 à 8, **caractérisé en ce que** le dispositif d'actionnement hydraulique (23) comprend deux distributeurs 2/3 (15, 15'), qui, en fonctionnement de pivotement, commutent alternativement une entrée (12, 12') et une sortie (12, 12') vers le ou du vérin à fluide de pression (8).

10. Dispositif selon une des revendications 6 à 9, **caractérisé en ce que** l'unité de commande (14) comprend une unité de commande électrique (17) qui est reliée côté entrée à un capteur d'angle de pivotement réel (26), à un capteur d'angle de pivotement de consigne (27) et le cas échéant à un capteur de valeur de consigne de compensation de vent latéral (28) et **en ce que** le dispositif de commande électrique (17), en fonctionnement de pivotement, détermine en continu, à partir de la comparaison du point de rebroussement actuel du piston (25) obtenu à l'aide du capteur d'angle de pivotement réel (26) au point de rebroussement prédéterminé, les instants de commutation (t_{schalt}) des distributeurs (15, 15') et/ou les instants de coupure (t_{Ab}) de la vanne de contrôle de pression (21).

11. Dispositif selon la revendication 10, **caractérisé en ce que** le dispositif de commande électrique (17) comprend des moyens pour calculer le point de rebroussement prédéterminé à partir des valeurs fournies par le capteur d'angle de pivotement de consigne (27) et le capteur de valeur de consigne de compensation de vent latéral (28).

12. Dispositif selon une des revendications 6 à 11, **caractérisé en ce que** le dispositif de commande électrique (17) produit un signal (d) périodique pour commander la vanne de contrôle de pression (21), qui présente une montée linéaire dans une zone de rebroussement du piston (25).

13. Dispositif selon la revendication 12, **caractérisé en ce que** le dispositif de commande électrique (17) comprend des moyens pour produire le signal de commande (d, w₁₅, w_{15'}) sous forme de signal numérique, en particulier sous forme de signal numérique à amplitude d'impulsion.

14. Dispositif selon une des revendications 6 à 13, **caractérisé en ce qu'**il est prévu des moyens de réglage tels que dans un mode de réglage, les points de rebroussement maximaux (S_{MAX}, S_{MIN}) du piston (25) soient atteints et détectés et **en ce qu'**ensuite une position mécanique médiane (S_{M}) du piston (25) soit calculées sur la base des valeurs de rebroussement détectées.
